(19) Europäisches Patentamt

European Patent Office

Office européen des brevets

(11) EP 0 678 054 B1

(12) **EUROPÄISCHE PATENTSCHRIFT**

(45) Veröffentlichungstag und Bekanntmachung des Hinweises auf die Patenterteilung:
**22.10.1997 Patentblatt 1997/43**

(21) Anmeldenummer: 95901365.7

(22) Anmeldetag: **10.11.1994**

(51) Int. Cl.$^6$: **B01J 20/04**, A01K 1/015

(86) Internationale Anmeldenummer:
**PCT/EP94/03723**

(87) Internationale Veröffentlichungsnummer:
**WO 95/13134** (18.05.1995 Gazette 1995/21)

(54) **VERFAHREN ZUR HERSTELLUNG VON SORPTIONSMITTELN AUF SMEKTITBASIS ZUR AUFNAHME VON FLÜSSIGKEITEN**

PROCESS FOR THE PRODUCTION OF BENTONITE-BASED SORBENTS FOR THE ABSORPTION OF LIQUIDS

PROCEDE DE PRODUCTION DE SORBANTS A BASE DE SMECTITE POUR ABSORBER DES LIQUIDES

(84) Benannte Vertragsstaaten:
**AT CH DE DK FR GB GR IT LI NL SE**

(30) Priorität: **10.11.1993 DE 4338362**

(43) Veröffentlichungstag der Anmeldung:
**25.10.1995 Patentblatt 1995/43**

(73) Patentinhaber: **SÜDCHEMIE AG**
**80333 München (DE)**

(72) Erfinder:
• **HÄHN, Reinhard**
**D-84186 Vilsheim (DE)**
• **HAUBENSAK, Otto**
**D-83089 Brannenburg (DE)**
• **EISGRUBER, Max**
**D-84079 Bruckberg (DE)**

(74) Vertreter: **Reitzner, Bruno, Dr.**
**Patentanwälte Dipl.-Ing. R. Splanemann**
**Dr. B. Reitzner, Dipl.-Ing. K. Baronetzky**
**Tal 13**
**80331 München (DE)**

(56) Entgegenhaltungen:
**EP-A- 0 303 760       EP-A- 0 515 959**
**WO-A-91/06210       DE-A- 2 725 687**
**US-A- 4 343 751       US-A- 4 570 573**
**US-A- 4 686 937**

**Beschreibung**

Die Erfindung betrifft ein Verfahren zur Herstellung von Sorptionsmitteln auf Smektitbasis zur Aufnahme von Flüssigkeiten. Diese Sorptionsmittel sind zur Aufnahme beliebiger Flüssigkeiten geeignet; sie eignen sich aber insbesondere als Streumittel für Heimtiere, weshalb sich die nachfolgenden Ausführungen insbesondere auf dieses Anwendungsgebiet beziehen.

Die Heimtierhaltung in einer weitgehend verstädterten Umwelt ist in zunehmendem Maß mit der Verwendung von Streumaterialien verbunden. Diese haben die Aufgabe, die von den Tieren abgegebenen Flüssigkeiten aufzusaugen und dabei möglichst die Geruchsentwicklung zu hemmen oder zu verhindern. Sie sollen ferner den halbfesten, feuchten tierischen Exkrementen und Ausscheidungen Feuchtigkeit entziehen, um damit die Geruchsentwicklung zu vermindern. Gute Streumaterialien haben darüberhinaus die Eigenschaft, die abgegebenen oder entzogenen Flüssigkeiten unter Bildung eines kompakten Klumpens aufzunehmen, der in einfacher und sparsamer Weise entfernt werden kann. Eine optimale Tierstreu hat somit ein hohes Saugvermögen.

Die auf dem Markt anzutreffenden Produkte sind einmal organische Substanzen, wie Stroh, Sägemehl, Holzspäne, Rinden, poröse Kunststoffperlen, geshreddertes Papier, Cellulosefasern, Agrarabfälle, Polyacrylate usw.; diese werden allein oder in Mischungen mit anorganischen Materialien eingesetzt. Der Nachteil der organischen Streumaterialien ist oftmals die nicht zufriedenstellende Klumpenbildung bzw. ihre Konsistenz sowie ihre Neigung zur bakteriellen Zersetzung, insbesondere im Zusammenwirken mit Feuchtigkeit.

Zum anderen sind aus der DE-A-3 816 225 geruchs- und feuchtigkeitsbindende Streumittel, insbesondere für Kleintiere, mit einem zellstoffhaltigen Material bekannt, wobei das zellstoffhaltige Material als Naßsubstanz mindestens mit einem kapillarfähigen, kleinkörnigen Stoff mit einer Korngröße < 0,5 mm in einem Gewichtsverhältnis von 90:10 bis 20:8 gemischt ist. Als zellstoffhaltiges Material kann beispielsweise die bei der Aufbereitung von Abwässern der Papierherstellung anfallenden feuchte Masse (Papierfangstoff) mit einem Feuchtigkeitsgehalt von 50 bis 60 Gew.-% verwendet werden. Als kapillarfähiger Stoff kann z.B. Bentonit verwendet werden, der im unbehandelten Zustand einen Feuchtigkeitsgehalt von etwa 30 Gew.-% hat. Bevorzugt wird jedoch Bimssteinmehl mit einem Feuchtigkeitsgehalt von höchstens 30 Gew.-%. Das erhaltene Streumittel muß getrocknet werden, was sehr energieaufwendig ist.

Aus der DE-A-37 28 812 und der DE-C-38 25 905 sind Sorptionsmittel auf der Basis von Tonen und Tonmineralen mit einem Gehalt eines Minerals aus der Gruppe der Smektite bekannt, die zur Erzielung eines hohen Porenvolumnes bei Temperaturen von mehr als 650 °C gebrannt werden. Als Porosierungsmittel können organische Substanzen, wie Sägemehl, Kork, Reisschalen oder dergleichen zugesetzt werden. Diese Porosierungsmittel werden jedoch beim Erhitzen ausgebrannt und verbleiben nicht mehr im Produkt. Das nach dem Brennen erhaltene Material ist nicht mehr quellfähig.

Die US-A-5 188 064 betrifft ein Verfahren zur Verbesserung des Sorptionsvermögens eines quellfähigen Smektittones mit einer Teilchengröße von mindestens 95 % < 200 μm, wobei dieser Ton mit einem teilchenförmigen cellulosehaltigen Material mit einer Teilchengröße von mindestens 95 % < 2000 μm vermischt wird. Das Gewichtsverhältnis zwischen dem cellulosehaltigen Material und dem Smektit beträgt etwa 0,05 bis 3:1. Die Bestandteile können entweder trocken oder naß miteinander vermischt werden. Das nach dem Trockenverfahren erhaltene Gemisch ist extrem staubig. Die Cellulosekomponente ist nicht in das Produkt eingebunden, so daß das Material zu einem starken Haften an Fell und Pfoten von Tieren neigt. Als Streumaterial ist dieses Gemisch nicht brauchbar. Das nach dem Naßverfahren erhaltene Gemisch hat gegenüber einem naß verkneteten Gemisch eine höhere Dichte und ein geringeres Sorptionsvermögen.

Aus der DE-C-3 034 169 ist eine wasserabsorbierende Einlage für Lebensmittelpackungen bekannt, die in einem Beutel aus einer wasserdurchlässigen Folie eine Füllung aus Kieselgur und einem organischen Gelbildner, wie Carboxymethylcellulose, Cellulosether, Polyvynilpyrolidon, Stärke, Dextrose, Gelatine und/oder Pektine enthält. Das Gemisch enthält weder einen Smektit noch Calciumsulfat.

Aus der WO 86/00496 ist ein als Streumaterial für Heimtiere geeignetes Sorptionsmittel bekannt, das durch Vermischen von Ton mit celluloshaltigem Material, wie Reisschalen oder Weizenkleie, Pelletieren des Gemisches, Trocknung und Erhitzen der Pellets auf eine Temperatur von 550 bis 1100°C hergestellt wird. Bei diesen Temperaturen wird das celluloshaltige Material verbrannt. Außerdem enthält das Sorptionsmittel keinen Gips.

Aus DE-A-4 028 933 ist ein Verfahren zur Herstellung eines Stoffes zur Aufnahme von Flüssigkeiten, insbesondere von Tierexkrementen, bekannt, bei dem Cellulosmaterialien als Füllstoffe zuerst grob und dann fein zerkleinert werden, bis sie eine watteähnliche Gestalt aufweisen, worauf sie mit einem Tonmehl trocken vermischt und verpreßt werden. Das Tonmehl wird im wesentlichen aus Tonerde-Mineralien auf der Basis von Kaolinit und Quarz gewonnen. Das Material enthält keinen Gips.

Aus der DE-A-4 101 243 ist ferner eine Tierstreu sowie ein Verfahren zu ihrer Herstellung bekannt, bei dem ein Cellulosematerial mit Beschwerungsmitteln, Verdickern und/oder Bindemitteln sowie Wasser vermischt, entwässert, zerkleinert und getrocknet wird. Als Cellulosematerial können z.B. Holz, Holzprodukte, Rückstände aus der Holzverarbeitung und Stroh verwendet werden. Als Verdicker können z.B. Kieselsäure, silicatische Materialien, Zeolith, Bentonit und Polyacrylate verwendet werden, wobei für den Bentonit kein Wassergehalt angegeben ist.

2

Ferner ist aus der DE-A-3 644 826 ein Stoff zur Aufnahme von Flüssigkeiten, insbesondere eine Tierstreu, bekannt, die durch eine Mischung aus Füllstoffen, Gips und Beschleunigern gekennzeichnet ist. Die Füllstoffe können aus Cellulose, insbesondere Altpapier und/oder textilem Material bestehen. Als Beschleuniger können Gipsstein bzw. Mischungen aus Gipsstein und anderen anorganischen Sulfaten verwendet werden. Der Nachteil dieses Verfahrens besteht darin, daß das cellulosehaltige Material vorgetrocknet und in einem aufwendigen Verfahrensschritt in eine watteähnliche Form gebracht werden muß.

Nach der EP-A-0 115 898 und der EP 0 169 946 wird ein Absorptionsmaterial für Flüssigkeiten auf der Basis von Abfallschlamm aus der Papierindustrie hergestellt. Dieser Abfallschlamm, der Cellulosefasern und anorganische Pigmente enthält, wird mit einer oberflächenaktiven Komponente versetzt, entwässert, granuliert, gesiebt und bis auf einen Wassergehalt von 2 bis 5 Gew.-% getrocknet. Das Trocknungsverfahren ist verhältnismäßig aufwendig und wegen der auftretenden Brandgefahr bedenklich. Außerdem bildet das Material in Kontakt mit Feuchtigkeit keine Klumpen.

Aus der US-A-4 570 573 ist eine Katzenstreu bekannt, die etwa 60 bis 94 Gew.-% eines Absorptionsmittels, etwa 1-35 Gew.-% Gips und etwa 3-12 Gew.-% Wasser enthält. Als Absorptionsmittel kann Ton und Papier verwendet werden. Der Gips liegt in Form des Calciumsulfat-Dihydrats vor, das schwach sauer ist und mit Harnstoff unter Bildung eines Harnstoff-Sulfatsalzes reagiert. Unter Ton versteht man im allgemeinen Sprachgebrauch ein Material, das als Hauptbestandteil Kaolin enthält.

Der Erfindung lag die Aufgabe zugrunde, ein Verfahren zur Herstellung von Sorptionsmitteln auf Smektitbasis zur Aufnahme von Flüssigkeiten bereitzustellen, bei dem ein möglichst hoher Anteil an feuchtem Papierfangstoff verwendet werden kann, ohne daß das Produkt zur Erhöhung der Sorptionsfähigkeit anschließend getrocknet zu werden braucht.

Diese Aufgabe wird erfindungsgemäß dadurch gelöst, daß man

(a) einen Smektit mit einem Wassergehalt von weniger als 6 Gew.-%;
(b) eine bei der Aufbereitung von Abwässern der Papierherstellung anfallende feuchte Masse aus faserförmiger Cellulose und anorganischen Pigmenten und;
(c) wasserfreies Calciumsulfat (Anhydrit) oder Calciumsulfat-Hemihydrat miteinander vermischt, verpreßt und bricht,
wobei man das Mengenverhältnis zwischen dem Smektit (a), der feuchten Masse (b) und dem Calciumsulfat (c) so wählt, daß der Wassergehalt (freies Wasser) des körnigen Materials weniger als 20 Gew.-% beträgt.

Unter "Verpressen" versteht man erfindungsgemäß eine Kompaktierung, z.B. eine Brikettierung, Pelletierung oder Tablettierung, im Gegensatz zu einer Formgebung im plastischen Zustand, z.B. durch Strangpressen oder Extrudieren.

Das erhaltene körnige Material ist fest und hat eine Wasseraufnahmefähigkeit von mehr als 100%, vorzugsweise von mehr als 120%. Eine Methode zur Bestimmung der Wasseraufnahmefähigkeit ist nachstehend angegeben, desgleichen auch eine Methode zur Bestimmung des Wassergehalts des als Ausgangsmaterial verwendeten Smektits und der Papiermasse sowie eine Methode zur Bestimmung des Wassergehalts des körnigen Materials

Der Smektit (a), die feuchte Masse (b) und das Calciumsulfat (c) werden vorzugsweise durch intensive Mischung miteinander vermischt. Die Energieaufnahme beim Vermischen beträgt im allgemeinen 30 bis 100, vorzugsweise 50 bis 80 Wh/kg Gemisch.

Zum Vermischen wird vorzugsweise ein Zwangsmischer (z.B. ein Mischer der Firma Eirich) verwendet. Anschließend wird das Gemisch in einem Kompaktor, (z.B. Kompaktor der Fa. Bepex) bei einem Druck von etwa 120 bis 200 kN kompaktiert. Man erhält hierbei Stücke mit den Abmessungen l = 6 bis 200 mm, b = 2 bis 6 mm, h = 4 bis 5 mm, die anschließend zu einem körnigen Material gebrochen werden, von dem eine Siebfraktion von 0,1 bis 10 mm insbesondere von 1 bis 5 mm gewonnen wird.

Die bei der Aufbereitung von Abwässern der Papierherstellung anfallende feuchte Masse aus faserförmiger Cellulose und anorganischen Pigmenten enthält überwiegend faserförmige Celluloseanteile und 10 bis 30 Gew.-% anorganische Pigmente, wie Calciumcarbonat, Kaolin und $TiO_2$ sowie andere, bei der Papierherstellung verwendete Pigmente. Die Anteile sind jeweils auf die Trockenmasse bezogen. Bei ihrer Verwendung hat die feuchte Masse (b) einen Wassergehalt von 30 bis 60, vorzugsweise von 40 bis 50 Gew.-%, insbesondere von etwa 45 Gew.-%.

Vorzugsweise stellt man das Verhältnis zwischen Smektit, (a) feuchter Masse (b) und Calciumsulfat (c), bezogen auf die jeweilige Trockenmasse, auf 2 bis 6 : 1 : 0,5 bis 3, insbesondere auf 2,5 bis 3,5 : 1 : 1 bis 2 ein.

Als Smektit verwendet man vorzugsweise einen Erdalkali- oder Alkalibentonit, der im grubenfeuchten Zustand einen Feuchtigkeitsgehalt von etwa 30 % hat. Der Bentonit kann einfacher getrocknet werden als die feuchte Masse (b), weil deren Trocknung mit der Gefahr einer Explosion verbunden ist, da beim Trocknen eine Staubentwicklung auftritt. Außerdem ist die Trocknung der feuchten Masse (b) aufwendig, da diese wenig rieselfähig ist.

Die Trocknung des Smektits erfolgt vorzugsweise dadurch, daß man das zu trocknende Material mit nicht mehr als 150°C, vorzugsweise mit nicht mehr als 120°C, belastet. Bei der Trocknung bei höheren Temperaturen kann eine Verminderung des Sorptionsvermögens des Smektits eintreten.

Das wasserfreie Calciumsulfat ($CaSO_4$) bzw. das Calciumsulfat-Hemihydrat ($CaSO_4$ x 1/2 $H_2O$) nehmen die

Feuchtigkeit aus der feuchten Masse (b) auf und werden hierbei zumindest teilweise in das Calciumsulfat-Dihydrat ($CaSO_4$ x 2 $H_2O$) umgewandelt. Auf diese Weise wird das freie Wasser aus dem System entfernt, ohne daß das Produkt getrocknet zu werden braucht. Das Calciumsulfat-Dihydrat stellt ferner ein Bindemittel für die anderen Komponenten dar, d.h. man erhält ein festes körniges Material, das beim Abpacken, beim Versand und beim Gebrauch keine Staubentwicklung zeigt.

Man kann ein aus Naturgips oder Industriegips gewonnenes wasserfreies Calciumsulfat bzw. Calciumsulfat-Hemihydrat verwenden, wobei man als Ausgangsmaterial aus Gründen der Billigkeit vorzugsweise Industriegips verwendet. Dieser fällt beispielsweise bei der Rauchgasentschwefelung an und kann in vielen Fällen nur auf Deponien entsorgt werden. Bei Verwendung von wasserfreiem Calciumsulfat ist im allgemeinen eine feine Mahlung und der Zusatz von "Anregern" (z.B. von Kombinationen aus Alkalisulfaten und Calciumhydroxid) erforderlich.

Gegenstand der Erfindung ist ferner ein nach dem vorstehend beschriebenen Verfahren erhältliches Sorptionsmittel in körniger Form, das einen Smektit (a), eine Masse (b) aus faserförmiger Cellulose und anorganischen Pigmenten und Calciumsulfat (c) in hydratisierter Form (vorzugsweise als Calciumsulfat-Dihydrat) enthält, wobei der Feuchtigkeitsgehalt (freies Wasser) des körnigen Materials nicht mehr als 20 Gew.-% beträgt.

Das im hydratisierten Calciumsulfat gebundene Wasser (Kristallwasser) ist hierbei nicht mitgerechnet.

Vorzugsweise enthält das Sorptionsmittel 38 bis 71, insbesondere 49 bis 60 Gew.-% Smektit (a) (bezogen auf Trockensubstanz), 9 bis 24, insbesondere 13 bis 19 Gew.-% der Masse (b) (bezogen auf Trockensubstanz), (c) 5 bis 30, insbesondere 10 bis 20 Gew.-% Calciumsulfat-Dihydrat und 5 bis 20, insbesondere 10 bis 15 Gew.-% freies Wasser.

Das erfindungsgemäße Sorptionsmittel kann ferner mit an sich bekannten Sorptionsmitteln, z.B. organischen Sorptionsmitteln verschnitten werden. Weiterhin kann das Sorptionsmittel Weißpigmente, Desinfektionsmittel und/oder Tierakzeptanzien enthalten.

Gegenstand der Erfindung ist ferner die Verwendung des vorstehend angegebenen Sorptionsmittels als Packungsmaterial, Aufsaugmittel für Flüssigkeiten (z.B. Körperflüssigkeiten, Öl, flüssige Chemikalien) sowie als Streumaterial für Heimtiere, insbesondere als Katzenstreu.

Der Wassergehalt des erfindungsgemäß verwendeten Smektits wird wie folgt bestimmt:

10 g Smektit werden in einer flachen Schale auf 0,01 g genau eingewogen und bei 105°C bis zur Gewichtskonstanz erhitzt (mindestens 2 Stunden). Anschließend läßt man die Probe im Exsikkator auf Raumtemperatur abkühlen und wiegt aus:

Auswertung:

$$\frac{\text{Einwaage - Auswaage}}{\text{Einwaage}} \times 100 = \text{Wassergehalt (\%)}$$

Der Wassergehalt (freies Wasser) des erfindungsgemäßen Sorptionsmittels wird ähnlich wie der Wassergehalt des Smektits bestimmt. Die Erhitzung erfolgt bei 105°C bis zur Gewichtskonstanz. Bei dieser Temperatur gibt das hydratisierte Calciumsulfat noch kein Kristalwasser ab. Der Wassergehalt der feuchten Masse (b) wird in entsprechender Weise bestimmt (Trocknung bei 105°C bis zur Gewichtskonstanz).

Die Wasseraufnahmefähigkeit des erfindungsgemäßen Sorptionsmittels wird nach der Methode der Firma Westinghouse (Nr. 17-A) ermittelt (vergl. Industrial Minerals, August 1992, Seite 57). Hierbei wird das bis auf einen Rastwassergehalt von 6 Gew.-% getrocknete Sorptionsmittel in einen kegeligen Behälter aus feinem Drahtgewebe (lichte Maschenweite 0,25 mm = 60 mesh, Durchmesser 7 cm, Höhe 7,6 cm) eingewogen (Einwaage E = 20 g). Anschließend wird das Gesamtgewicht (Drahtgewebe + Einwaage E = $E_1$ in g) ermittelt. Das gefüllte Gewebe wird 20 Minuten in eine mit Wasser gefüllten Glasschale derart eingehängt, daß das Sorptionsmittel vollständig untertaucht. Nach 20 Minuten nimmt man das Drahtgewebe aus dem Wasser und läßt es 20 Minuten abtropfen. Unmittelbar danach wird das Gewicht des Behälters mit Inhalt ermittelt ($E_2$ in g). Die Auswertung wird wie folgt durchgeführt:

$$\text{Wasseraufnahmefähigkeit in Prozent} = \frac{E_2 - E_1}{E} \times 100$$

Die Wasserdurchlässigkeit wird nach dem Wasserdurchschlagtest wie folgt bestimmt:

Auf eine eingeebnete und nicht verdichtete Schüttung des körnigen Sorptionsmittels in einer Glasschale (Durchmesser 140 mm, Höhe 75 mm, Füllhöhe 50 mm) wird Wasser aus einem 50 ml-Bürette gegeben und die Eindringtiefe beobachtet. Hierbei wird der Auslauf der Bürette in einer Höhe von 3 bis 4 cm in die Mitte der Schüttung gebracht, worauf 60 ml Leitungswasser innerhalb von 55 bis 60 Sekunden auslaufen gelassen werden. Nach einer Wartezeit von 3 Minuten wird an der Schalenunterseite geprüft, ob Wasser durchgelaufen ist; das Durchlaufen ist an einer Verfärbung des körnigen Materials an der Schalenunterseite erkennbar. Die Auswertung wird wie folgt durchgeführt:

4

- Verfärbung am Schalenboden nicht sichtbar: Test bestanden;
- Verfärbung am Schalenboden sichtbar: Test nicht bestanden.

Das Schüttgewicht wird wie folgt bestimmt:

Ein 500 ml-Meßzylinder wird zunächst leer gewogen. Darauf wird ein Pulvertrichter mit einer Öffnung von etwa 15 cm und einer Auslaßöffnung von etwa 3 cm aufgesetzt und innerhalb von etwa 5 Sekunden mit dem körnigen Sorptionsmittel gefüllt. Danach wird der Pulvertrichter vom Meßzylinder abgenommen, und zwar so, daß das darin befindliche körnige Material einen überstehenden Kegel bildet. Dieser wird mit einem breiten Spatel entlang der Schnittkante des Meßzylinders abgestreift. Der gefüllte Meßzylinder wird außen von anhängenden Körnern oder Staub befreit und erneut gewogen. Das Schüttgewicht wird wie folgt berechnet:

$$\text{Schüttgewicht (g/l)} = 2 \times \text{Gewicht netto (g/500 ml)}$$

Die Erfindung ist durch die nachstehenden Beispiele in nicht einschränkender Weise erläutert.

Beispiel 1

Etwa 1,95 kg getrockneter Calciumbentonit (Trockentemperatur 120 °C, Trockendauer 1 Std.) mit einem Wassergehalt von etwa 7 Gew.-% werden zusammen mit 0,55 kg eines Papierfangstoffes aus 27,5 Gew.-% Cellulose, 27,5 Gew.-% anorganischen Pigmenten und 45 Gew.-% Wasser sowie mit 0,3 kg Calciumsulfat-Hemihydrat 5 Minuten intensiv vermengt. Die Energieaufnahme beträgt 60 Wh/kg. Die Masse wird bei einem Druck von 180 kN verpreßt und die Stücke werden zu einem körnigen Material mit einer Durchschnittsgröße von 1 bis 5 mm gebrochen. Das körnige Material hat eine hohe Festigkeit, d.h. es tritt beim Transport und beim Umfüllen keine Staubbildung auf.

Das Schüttgewicht, die Wasseraufnahmefähigkeit, der Wassergehalt (freies Wasser) und die Wasserdurchlässigkeit (Durchschlagtest) des erhaltenen körnigen Materials sowie dessen Klumpenbildungsfähigkeit sind in der Tabelle angegeben.

Beispiel 2

1,95 kg getrockenter Na-Bentonit (Trockentemperatur ca. 120 °C, Trockendauer 1 Stunde) mit einem Wassergehalt von etwa 11 Gew.-% werden zusammen mit etwa 0,55 kg Papierfangstoff wie nach Beispiel 1 und 0,3 kg Calciumsulfat-Hemihydrat etwa 5 Minuten in einem Zwangsmischer intensiv vermischt. Die Mischung wird wie nach Beispiel 1 kompaktiert und in einem Backenbrecher gebrochen. Die Fraktion von 1 bis 5 mm wird ausgesiebt. Beim Transport und beim Umfüllen des körnigen Materials tritt keine Staubbildung auf.

Die Eigenschaften des körnigen Materials sind in der Tabelle angegeben.

Beispiel 3

1,5 kg eines wie nach Beispiel 1 getrockneten Calciumbentonits mit einem Wassergehalt von 7 Gew.-% werden mit 0,75 kg eines Papierfangstoffs wie nach Beispiel 1 und 0,75 kg Calciumsulfat-Hemihydrat intensiv vermischt. Die Mischung wird wie nach Beispiel 1 kompaktiert und gebrochen; die Fraktion von 1 bis 5 mm wird ausgesiebt. Beim Transport und beim Umfüllen des körnigen Materials trat keine Staubbildung auf. Die Eigenschaften sind in der Tabelle angegeben.

Beispiel 4

1,95 kg eines wie nach Beispiel 1 getrockneten Calciumbentonits mit einem Wassergehalt von 7 Gew.-% werden mit 0,55 kg des Papierfangstoffs von Beispiel 1 und 0,3 kg wasserfreiem Calciumsulfat (wasserfreier Stuckgips) 5 Minuten intensiv vermischt. Die Mischung wird wie nach Beispiel 1 kompaktiert, gebrochen und gesiebt, wobei die Fraktion von 1 bis 5 mm verwendet wird. Das körnige Material zeigt beim Transport und beim Umfüllen keine Staubbildung.

Tabelle

|  | Beispiel 1 | Beispiel 2 | Beispiel 3 | Beispiel 4 |
|---|---|---|---|---|
| Schüttgew. | 896 | 860 | 885 | 890 |
| Wasseraufnahmefähigk. | 136 | 202 | 122 | 136 |
| Zusammens.d. Endprod.,(%) |  |  |  |  |
| Papierfangstoff (TS) | 10,9 | 10,9 | 13,6 | 10,9 |
| Bentonit(TS) | 65,0 | 62,0 | 46,5 | 64,8 |
| $CaSO_4 x2H_2O$ | 12,7 | 12,7 | 25,2 | 13.6 |
| Freies $H_2O$ | 11,4 | 14,4 | 10,0 | 10,8 |
| $H_2O$-Geh. insges. | 13,4 | 16,4 | 14,7 | 13,6 |
| Durchschlagtest | best. | best. | best. | best. |
| Klumpenbildung | gut | gut | gut | gut |

Die Tabelle zeigt, daß das Material mit Natriumbentonit von Beispiel 2 die höchste Wasseraufnahmefähigkeit hat. Aber auch die Materialien nach den Beipielen 1, 3 und 4 haben noch eine sehr hohe Wasseraufnahmefähigkeit. Alle Proben bestanden den Durchschlagtest und zeigten eine gute Klumpenbildung.

**Patentansprüche**

1. Verfahren zur Herstellung von Sorptionsmitteln auf Smektitbasis zur Aufnahme von Flüssigkeiten, dadurch gekennzeichnet, daß man

   (a) einen Smektit mit einem Wassergehalt von weniger als 6 Gew.-%;
   (b) eine bei der Aufbereitung von Abwässern der Papierherstellung anfallende feuchte Masse aus faserförmiger Cellulose und anorganischen Pigmenten; und
   (c) wasserfreies Calciumsulfat oder Calciumsulfat-Hemihydrat

   miteinander vermischt, verpreßt und bricht;
   wobei man das Mengenverhältnis zwischen dem Smektit (a), der feuchten Masse (b) und dem Calciumsulfat (c) so wählt, daß der Wassergehalt (freies Wasser) des körnigen Materials weniger als 20 Gew.-% beträgt.

2. Verfahren nach Anspruch 1, dadurch gekennzeichnet, daß man den Smektit (a), die feuchte Masse (b) und das Cacliumsulfat (c) durch intensive Mischung miteinander vermengt.

3. Verfahren nach Anspruch 1 oder 2, dadurch gekennzeichnet, daß man eine feuchte Masse (b) mit einem Wassergehalt von 30 bis 60%, vorzugsweise von 40 bis 50 Gew.-% einsetzt.

4. Verfahren nach einem der Ansprüche 1 bis 3, dadurch gekennzeichnet, daß man das Verhältnis von Smektit (a), feuchter Masse (b) und Calciumsulfat (c) bezogen auf die jeweilige Trockenmasse, auf 2 bis 4 : 1 : 0,5 bis 3, vorzugsweise auf 2,5 bis 3,5 : 1 : 1 bis 2 einstellt.

5. Verfahren nach einem der Ansprüche 1 bis 4, dadurch gekennzeichnet, daß man als Smektit einen Erdalkali- oder Alkali-Bentonit verwendet.

6. Verfahren nach einem der Ansprüche 1 bis 5, dadurch gekennzeichnet, daß man ein aus Naturgips oder Industriegips gewonnenes wasserfreies Calciumsulfat (Anhydrit) oder Calciumsulfat-Hemihydrat verwendet.

7. Verfahren nach einem der Ansprüche 1 bis 6, dadurch gekennzeichnet, daß man die kompaktierte Mischung aus (a) + (b) und (c) zu einem körnigen Material bricht, von dem Siebfraktion von etwa 0,1 bis 10 mm, vorzugsweise von 1 bis 5 mm, gewonnen wird.

8. Sorptionsmittel, das nach dem Verfahren nach einem der Ansprüche 1 bis 7 erhältlich ist und das in körniger Form einen Smektit (a), eine Masse (b) aus faserförmiger Cellulose und anorganischen Pigmenten, gewonnen aus den Abwässern der Papierherstellung, und Calciumsulfat (c) in hydratisierter Form enthält, wobei der Feuchtigkeitsgehalt (freies Wasser) des körnigen Materials nicht mehr als 20 Gew.-% beträgt.

9. Sorptionsmittel nach Anspruch 8, dadurch gekennzeichnet, daß es 38 bis 71, vorzugsweise 49 bis 60 Gew.-% Smektit (a) (bezogen auf Trockensubstanz), 9 bis 24, vorzugsweise 13 bis 19 Gew.-% der Masse (b) (bezogen auf Trockensubstanz), (c) 5 bis 30, vorzugsweise 10 bis 20 Gew.-% Calciumsulfat-Dihydrat und 5 bis 20, vorzugsweise 10 bis 15 Gew.-% freies Wasser enthält.

10. Sorptionsmittel nach Anspruch 8 oder 9 gekennzeichnet durch eine Wasseraufnahmefähigkeit von mindestens 100%, vorzugsweise von mindestens 120%

11. Sorptionsmittel nach einem der Ansprüche 8 bis 10, dadurch gekennzeichnet, daß es mit an sich bekannten Sorptionsmitteln, z.B. mit organischen Sorptionsmitteln, verschnitten ist.

12. Sorptionsmittel nach einem der Ansprüche 8 bis 11, dadurch gekennzeichnet, daß es Weißpigmente, Desinfektionsmittel und/oder Tierakzeptanzien enthält.

13. Verwendung des Sorptionsmittels nach einem der Ansprüche 8 bis 12 als Packungsmaterial, Aufsaugmittel für Flüssigkeiten sowie als Streumaterial für Heimtiere, insbesondere als Katzenstreu.

**Claims**

1. A process for producing sorbents based on smectites for absorbing liquids, characterized in that

   (a) a smectite with a water content of less than 6% by weight;
   (b) a wet mass of fibrous cellulose and inorganic pigments which is obtained by processing of waste waters from paper manufacture; and
   (c) anhydrous calcium sulfate or calcium sulfate-hemihydrate are mixed together, compressed and crushed; the quantitative ratio between the smectite (a), the wet mass
   (b) and calcium sulfate (c) being selected such that the water content (free water) of the granular material is less than 20% by weight.

2. The process according to claim 1, characterized in that the smectite (a), the wet mass (b) and the calcium sulfate (c) are blended under intensive mixing.

3. The process according to claims 1 or 2, characterized in that a wet mass (b) having a water content of 30 to 60%, preferably from 40 to 50% by weight, is used.

4. The process according to any one of claims 1 to 3, characterized in that the ratio of the smectite (a), to the wet mass (b) and to the calcium sulfate (c) based on the respective dry mass, is adjusted to 2 to 4 : 1 : 0,5 to 3, preferably to 2.5 to 3.5 : 1 : 1 to 2.

5. The process according to any one of claims 1 to 4, characterized in that an alkaline earth or alkali-bentonite is used as the smectite.

6. The process according to any one of claims 1 to 5, characterized in that water-free calcium sulfate (anhydrite) or calcium sulfate-hemihydrate is used which have been obtained from natural gypsum or industrial gypsum.

7. The process according to any one of claims 1 to 6, characterized in that the compacted mixture of (a) + (b) and (c) is fragmented to form a granular material from which the sieve fraction from about 0.1 to 10 mm, preferably from 1 to 5 mm is obtained.

8. Sorbent obtainable by the process according to any one of claims 1 to 7 and which contains, in granular form, a smectite (a), a mass (b) of fibrous cellulose and inorganic pigments, obtained from the waste waters of the paper manufacturing, and calcium sulfate (c) in hydrated form, the moisture content (free water) of the granular material being not more than 20% by weight.

9. Sorbent according to claim 8, characterized in that it contains 38 to 71, preferably 49 to 60% by weight of smectite (a) (based on the dry substance), 9 to 24, preferably 13 to 19% by weight of mass (b) (based upon the dry substance), (c) 5 to 30, preferably 10 to 20% by weight of calcium sulfate-dihydrate and 5 to 20, preferably 10 to 15% by weight of free water.

10. Sorbent according to claims 8 or 9, characterized by a water absorption capacity of at least 100%, preferably of at least 120%.

11. Sorbent according to any one of claims 8 to 10, characterized in that it is blended with sorbents known per se, e.g. with organic sorbents.

12. Sorbent according to any one of claims 8 to 11, characterized in that it contains white pigments, disinfectants and/or animal acceptance agents.

13. The use of the sorbent according to any one of claims 8 to 12 as packing material, absorption agent for liquids and as litter for pets, especially as cat litter.

**Revendications**

1. Procédé de fabrication de matières absorbantes à base de smectite pour l'absorption de liquides, caractérisé en ce que l'on mélange

    (a) une smectite ayant une teneur en eau inférieure a 6 % en poids,
    (b) une masse humide contenant des fibres de cellulose et des pigments minéraux, isolée à partir d'eaux résiduaires rejetées par l'industrie papetière, et
    (c) du sulfate de calcium anhydre ou de l'hémihydrate de sulfate de calcium,
    en ce que l'on comprime et concasse le mélange,
    le rapport quantitatif entre la smectite (a), la masse humide et le sulfate de calcium (c) étant choisi de manière à ce que la teneur en eau (eau libre) du matériau granuleux soit inférieure à 20 % en poids.

2. Procédé conforme à la revendication 1, caractérisé en ce que l'on mélange intensément la smectite (a), la masse humide (b) et le sulfate de calcium (c).

3. Procédé conforme à la revendication 1 ou 2, caractérisé en ce que l'on utilise une masse humide (b) ayant une teneur en eau de 30 à 60 %, de préférence de 40 à 50 % en poids.

4. Procédé conforme à une des revendications 1 à 3, caractérisé en ce que l'on ajuste le rapport smectite (a) / masse humide (b) / sulfate de calcium (c) à une valeur, exprimée en poids de matière sèche, de 2-4/1/0,5-3, de préférence de 2,5-3,5/1/1-2.

5. Procédé conforme à une des revendications 1 à 4, caractérisé en ce que l'on utilise, comme smectite, une bentonite de métal alcalin ou alcalino-terreux.

6. Procédé conforme à une des revendications 1 à 5, caractérisé en ce que l'on utilise du sulfate de calcium anhydre (anhydrite) ou de l'hémihydrate de sulfate de calcium obtenu à partir de gypse naturel ou de gypse industriel.

7. Procédé conforme à une des revendications 1 à 6, caractérisé en ce que l'on concasse le mélange comprimé de (a) + (b) + (c) pour obtenir un matériau granuleux à partir duquel on sépare par tamisage une fraction de particules ayant une taille d'environ 0,1 à 10 mm, de préférence de 1 à 5 mm.

8. Matière absorbante que l'on peut obtenir selon le procédé conforme à une des revendications 1 à 7, et qui contient, sous forme granuleuse, une smectite (a), une masse (b) contenant des fibres de cellulose et des pigments minéraux, isolée d'eaux résiduaires rejetées par l'industrie papetière, et du sulfate de calcium (c) sous forme hydratée, le taux d'humidité (eau libre) du matériau granuleux ne dépassant pas 20 % en poids.

9. Matière absorbante conforme à la revendication 8, caractérisée en ce qu'elle contient de 38 à 71 % en poids, de préférence de 49 à 60 % en poids de smectite (a) (rapporté aux matières sèches), de 9 à 24 % en poids, de préférence de 13 à 19 % en poids de la masse (b) (rapporté aux matières sèches), (c) de 5 à 30 %, de préférence de 10 à 20 % en poids de dihydrate de sulfate de calcium et de 5 à 20 %, de préférence de 10 à 15 % en poids d'eau libre.

10. Matière absorbante conforme à la revendication 8 ou 9, caractérisée par une capacité d'absorption d'eau d'au moins 100 %, de préférence d'au moins 120 %.

11. Matière absorbante conforme à une des revendications 8 à 10, caractérisée en ce qu'elle est mélangée avec des matières absorbantes connues, par exemple avec des matières absorbantes organiques.

12. Matière absorbante conforme à une des revendications 8 à 11, caractérisée en ce qu'elle contient des pigments blancs, des agents désinfectants et/ou des agents d'acceptance par les animaux.

13. Utilisation de la matière absorbante conforme à une des revendications 8 à 12 comme matériau d'emballage, comme agent absorbant de liquides ainsi que comme litière pour animaux domestiques, en particulier comme litière pour chats.